# EUROPEAN PATENT APPLICATION

(11) **EP 1 246 054 A1**
(43) Date of publication of application: **02.10.2002**
(21) Application number: 01303088.7
(22) Date of filing: 30.03.2001
(51) Int. Cl.: G06F 9/44

(54) **Creating software programs from software components**

(71) Applicant: BRITISH TELECOMMUNICATIONS public limited company, London EC1A 7AJ (GB)
(72) Inventor: The designation of the inventor has not yet been filed
(74) Representative: Read, Matthew Charles

(57) **Abstract**

A tool for creating a software solution from a plurality of software components, includes a user operable input (6) for defining a proposition for a software solution, the proposition being defined in terms of a selection of relatively high level predetermined capabilities (C1, C2, C3) required for the solution, a searching device (27) responsive to the capabilities selected for the proposition, to search through stored data (A) corresponding to the software components held in a data store (3), the data corresponding to relatively low level predetermined functional abilities of the software components such as to identify components that have functional abilities associated with the selected capabilities, and an output (14, 19) to identify the components found by the searching to be suitable for use together to provide a solution corresponding to the proposition.

## Description

This invention relates to a system and method for devising software solutions assembled from software components.

Typically, a software solution for a particular enterprise is created on an individual basis to achieve a particular result. In object orientated programming, the software may be configured from software class which may comprise extensions of previously developed classes that inherit particular characteristics, in a manner well known ***per se.*** However, the approach is time consuming and may involve rewriting code for solutions that have previously been devised in other contexts.

The present invention seeks to provide a solution to this problem.

According to the invention there is provided a tool for creating a software solution from a plurality of software components, including a user operable input for defining a proposition for a software solution, the proposition being defined in terms of a selection of relatively high level predetermined capabilities required for the solution, a searching device responsive to the capabilities selected for the proposition, to search through stored data corresponding to the software components held in a data store, the data corresponding to relatively low level predetermined functional abilities of the software components such as to identify components that have functional abilities associated with the selected capabilities, and an output to identify the components found by the searching to be suitable for use together to provide a solution corresponding to the proposition.

The data corresponding to the individual components may be associated with component classes which are associated with the capabilities. The stored data may correspond to both functional abilities and non-functional abilities of the components.

The tool may be operable to define links between the capabilities for the proposition and the searching device is operable to search the stored data to identify components which can perform with one another according to the links. Also, the searching device is operable to apply constraints to the search performed according to predetermined characteristics of the stored data.

In order that the invention may be more fully understood an embodiment thereof will now be described by way of example, with reference to the accompanying drawings in which:
Figure 1 is a schematic illustration of client-server architecture used in the example of the invention;
Figure 2 is a schematic illustration of a classification scheme for software components, in accordance with the invention;
Figure 3 is a schematic block diagram of a workflow performed when selecting software components;
Figure 4 is a schematic illustration of a proposition made up of capabilities selected from the classification scheme shown in Figure 2;
Figure 5 illustrates a window for defining a proposition;
Figure 6 illustrates a window which display capabilities corresponding to the proposition;
Figure 7 illustrates components which satisfy the requirements of the capabilities shown in Figure 6;
Figure 8 illustrates a window which displays a list of components corresponding to the graphical display of Figure 7; and
Figure 9 illustrates a broker system for use in providing software components for assembly into software solutions.

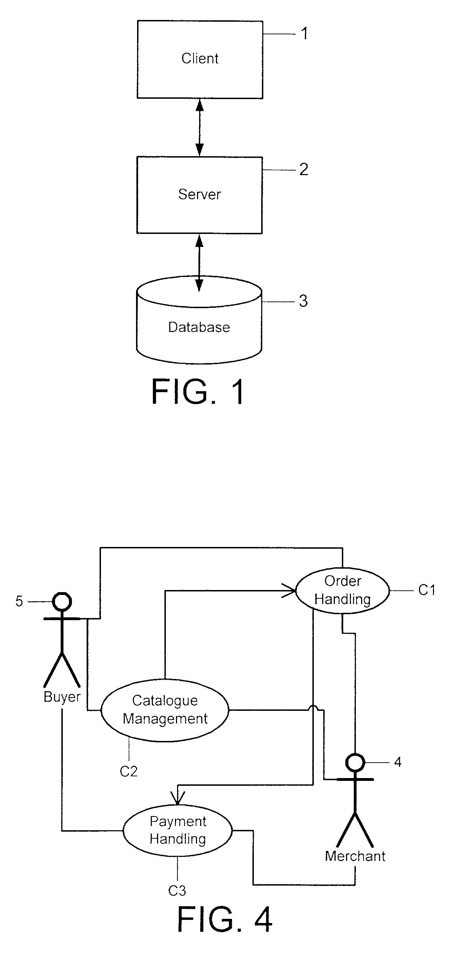

Referring to Figure 1, a client-server architecture is utilised in which a process run at client 1 selects software components to be assembled in order to provide a software solution, details of the software components being obtained through a server 2 from a database 3. As well known in the art, the client may comprise a workstation such as a personal computer with a processor, display screen keyboard and mouse, which will not be described in detail herein.

As explained in more detail hereinafter, the individual software components are categorised according to functional and non-functional characteristics and data corresponding to these characteristics are held in the database 3. The software components are tangible items of software such as word processor programs, proprietary databases and other "off-the-shelf" software components, that are specified in terms of their version e.g. Microsoft Word 2000, Microsoft Word 95.

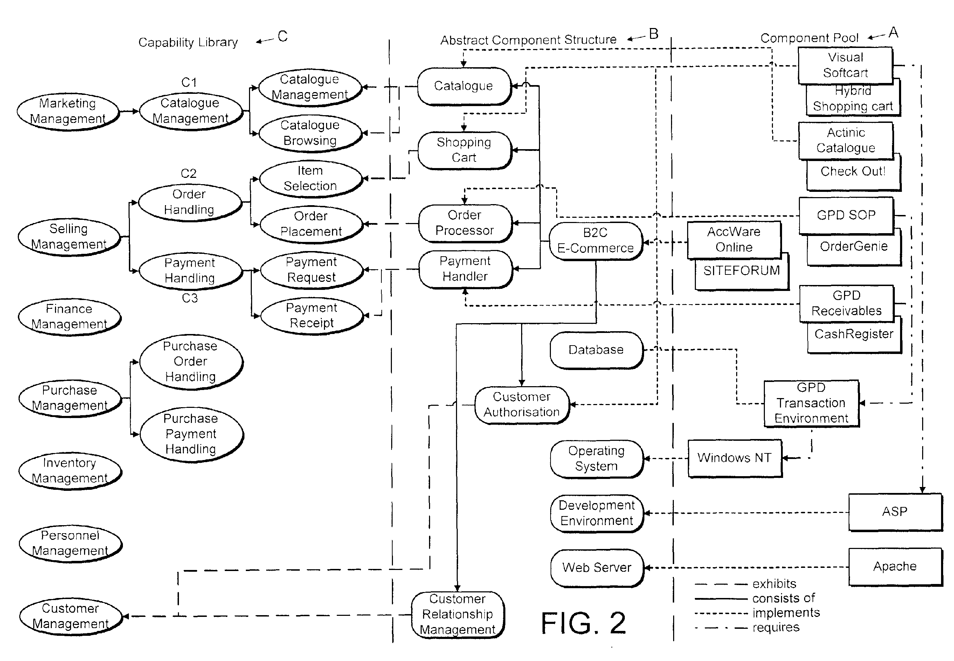

In order to facilitate selection of individual components for a particular solution, the components are associated with abstract component structures, which in turn are associated with capabilities as shown in Figure 2. In the Figure, individual components are shown as rectangular boxes in region A of the diagram, abstract component structures are shown as rounded boxes in region B of the drawing and individual capabilities are shown as elliptical containers in region C of the drawing. The process run on client 1 has a user input configured so that the user can select one or more capabilities from a capability library and then interrogate data concerning components (region A) relevant for the selected capabilities, by reference to the abstract component structure (region B).

This general process will now be described by way of example in which a system designer proposes to create a business-to-business software solution for handling transactions between a merchant and a buyer. This proposition is given a working title " Trader Service" by the designer of in this example.

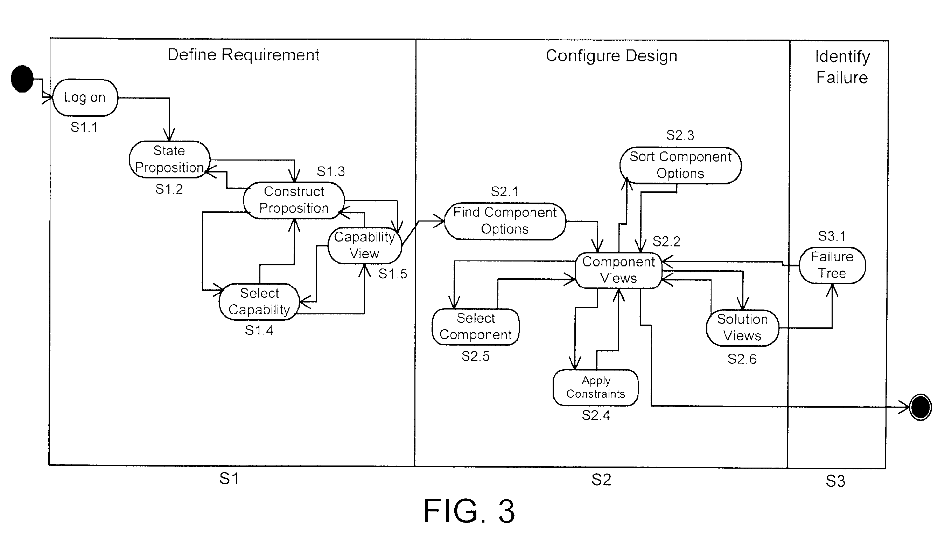

Figure 3 is an overview of the workflow associated with the design process. This involves three major stages. In a first step S1, a requirement is defined for the proposition. At step S2, one or more configurations of software components is defined for the purpose of fulfilling the design requirements specified at step S1. If failure is identified at step S3, the design configuration is modified with a view to satisfying the requirement defined at step S1.

In more detail, the user logs on at step S1.1 and at step S1.2 states the proposed name for the proposition i.e. Trader Service in this example. Then, at step S1.3, the designer constructs the proposition by selecting capabilities as shown at step S1.4 from the library of capabilities shown in region C of Figure 2. As will be explained hereinafter, the relationships between the abstract component structure which corresponds to the capabilities i.e. the structures corresponding to region B of Figure 2, are displayed to the designer as shown at step S1.5.

During the configuration step S2, a search is carried out at step S2.1 to find component options which correspond to the capabilities defined in step S1. The results are displayed to the designer at step S2.2. The component options may be sorted according to preference as shown at step S2.3. Constraints may be applied to the selection of the components as shown at step S2.4, by the designer. The individual options may be selected for display individually as shown at step S2.5. Thus, a solution may be established as shown at step S2.6 and the solution may be tested for its operational characteristics so that if a failure is identified at step S2.1, the component selection may be modified at step S2.2 to provide a new solution which can be similarly tested so as to optimise the solution.

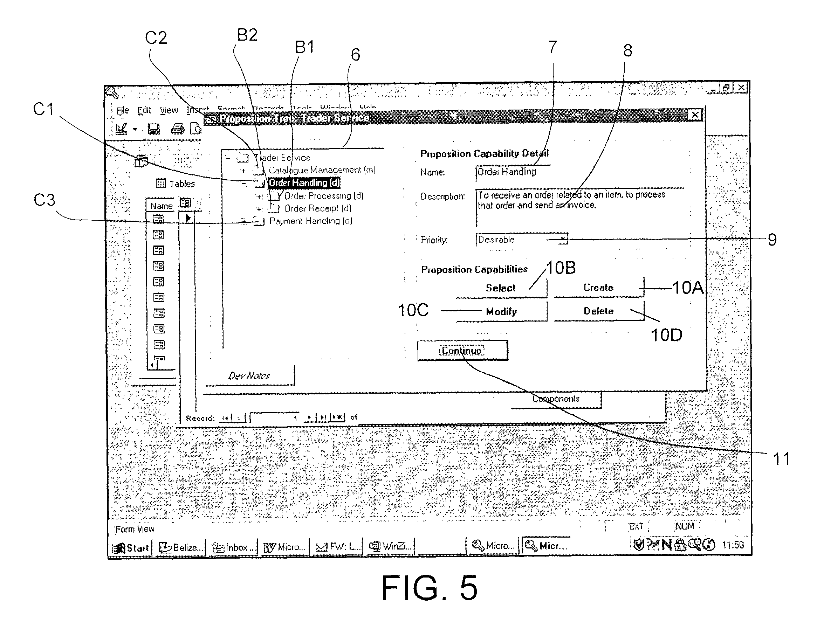

Figure 4 illustrates an example of actors and associated capabilities for the example "Trader Service". In this proposition, the actors comprise a merchant 4 and a buyer 5. The Trader Service proposition involves capabilities C1, C2, and C3 shown in Figure 2 in the capability library (region C), namely order handling C1 catalogue management C2 and payment handling C3. The required information flows between the capabilities are shown by arrows in Figure 4.

Figure 5 illustrates a viewing window displayed on the display screen of the client 1 for the process S1 in which the initial proposition is constructed during step S1.3. The designer drags and drops individual capabilities into a proposition tree which has been named Trader Service shown in dialogue box 6. It can be seen that for this example, the resulting proposition tree includes capabilities C1, C2 and C3. A file icon corresponding to capability C1 is shown open and includes abstract component structures B1 and B2 corresponding to "order processing" and "order receipt".

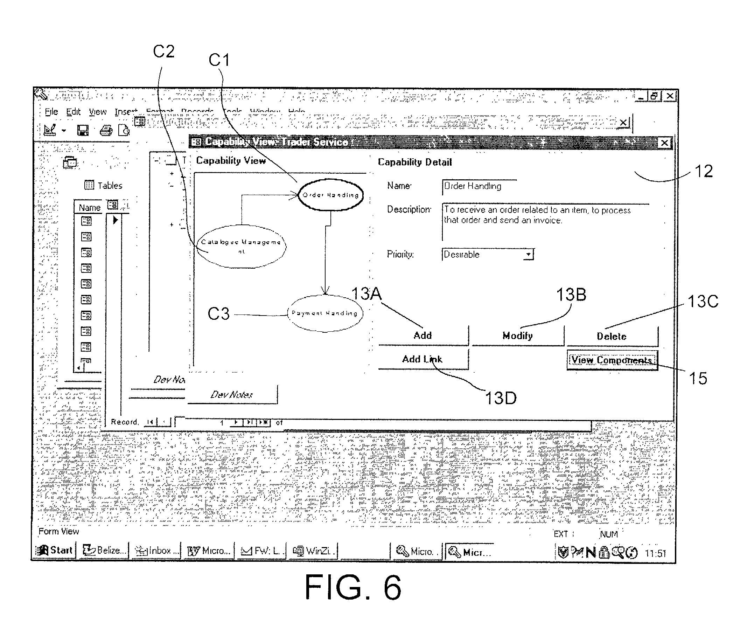

It will be seen that proposition C1 is highlighted and descriptors corresponding to the proposition are presented in dialogue boxes 7, 8. A priority associated with the capability C1 can be selected in dialogue box 9, such as desirable or mandatory and the result is illustrated by "d" and "m" as shown in dialogue box 6. Propositions selected for the tree "Trader Service" shown in Figure 6 can be selectively included, modified, deleted or, if necessary created using buttons 10A-D.

Button 11 permits a further window 12 to be opened as shown in Figure 6. This illustrates graphically the interrelationship between the capabilities that make up the proposition - Trader Service. In this view, buttons 13A-D can be used to add, modify or delete links shown by arrows between the displayed capabilities. The arrows are not stored as data ***per se*** but are used to influence the component searches which are carried out since the arrows indicate desired levels of communication between the capabilities which can be checked in the searches for suitable components.

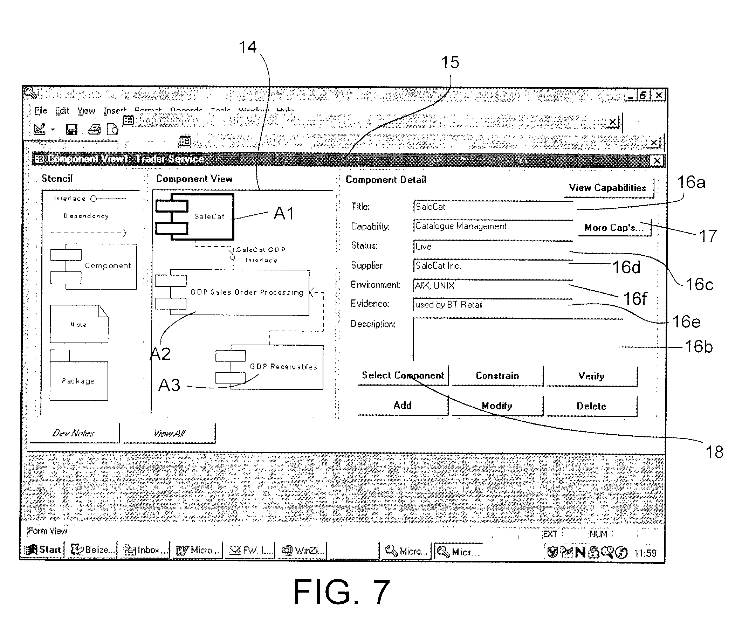

Figure 7 illustrates a window 14, which is displayed by operating button 15 shown in Figure 6. This window corresponds to the outcome of the component search carried out at step S2.1 shown in Figure 3. The search illustrates that components A1, A2 and A3 connected shown will satisfy the capability shown in window 12 of Figure 6.

A detailed description of the individual components when highlighted in window 15 are shown in dialogue box region 16.

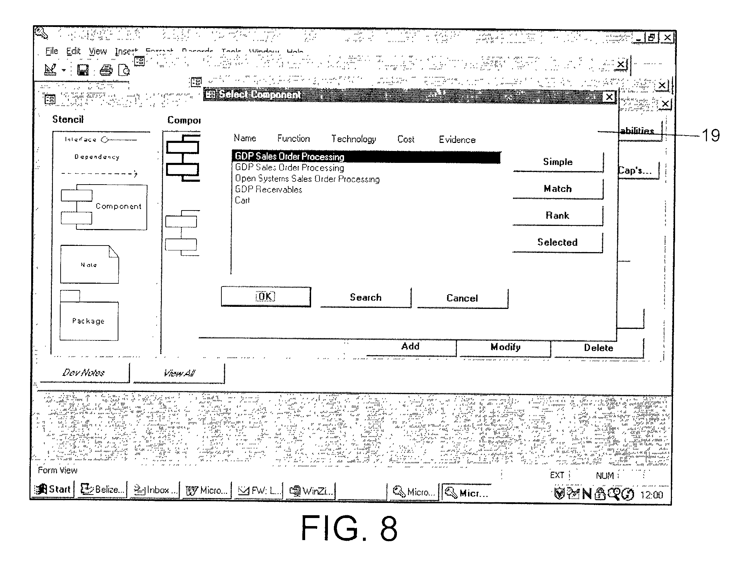

It may be that the search performed at step S2.1 identifies more than one set of components which will fulfil the capabilities of the proposition. Views of these alternative solutions may be selected by means of button 17. The individual components may be highlighted and selected by using button 18 and the resulting choices are display in a component selection window 19 shown in Figure 8. In this way, a group of components which will fulfil the capabilities of the proposition can be built up in order to provide a software solution corresponding to the proposition "Trader Service".

As previously explained with reference to Figure 3, constraints can be applied at step S2.4 when finding; component options for the design configuration. For example, components from a particular supplier may be applied as a constraint or a price range may be specified.

A more detailed description of the parameters used to define individual components in the database 3 will now be described. The individual components are defined in terms of their general configuration, their functional properties, properties of their interfaces and interactions, non-functional properties and general commercial properties. An example of a more specific set of property definitions is given below.

### Configuration Management

### Component Name

A human readable name provided by the supplier, displayed in dialog box 16a of Fig. 7.

### Component Description

A free text field with a summary description of the component, displayed in dialog box 16b of Fig. 7.

### Component Parts

If a component has a number of parts this is the list of those parts. In addition each part may themselves be made up of parts

### Version Identifier

The version number is supplied by the component supplier and indicates the version, when applicable, of the component.

### Variant Identifier

The variant e.g. localised English version, is supplied by the component supplier and indicates the variant, when applicable, of the component.

### Change Summary

A summary of free text lines describing changes to this version of the component compared with previous version(s).

### Component Status

This is displayed in dialog box 16c in Figure 7. Allowable values are:
Concept
Prototype
Beta
Production
Obsolescent
Obsolete
Withdrawn
Demo

### Supersedes

This property points to one or more other components that are superseded by this component.

### Functional Properties

### Component Type

Primary Type values are:

| | |
|---|---|
| Component | Where the component is an active part of the system |
| Support | Where the component is required but not active |

If "Component" then sub-type is:-

| | |
|---|---|
| Operating system | (fundamental infrastructure) |
| Framework | (specialised infrastructure for a given problem |
| | domain) |
| Application | (can stand alone) |
| Application component | (cannot stand alone) |

If "Support" then sub-type is :-

| | |
|---|---|
| Tool | (used in creation or control of application) |
| Data Store | (storage and management of data) |

### Functional Ability

Syntax

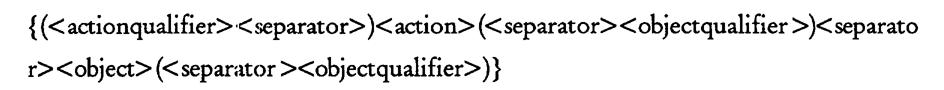

### Compliance

This property covers the adherence to application-related standards or conventions or regulations defined in laws and similar prescriptions. It is a list of applicable standards which may be domain specific sets.

### Standard

This property allows the identification of a standard definition which the component is compliant with. It has multiple fields for each standard :-
- Level - of compliance allows for an identification of which level of compliance is claimed for a multi-level standard.
- Exclusions - allow the definition of any restrictions defined by the certifier on the certificate issued.
- Certifier - provides the name etc of the certification body.
- Evidence - is a free-text "bucket" allowing any supporting information to be provided, which may be displayed in dialog box 16e of Fig. 7.

These will be duplicated for each standard to which the component complies

### Properties relating to interfaces and interactions

### Port type definition

A port type definition will indicate the type of data the port can take.

### Port Direction

The port direction property describes whether the interface is either input or output or bidirectional.

### Information Flow

Values
- Control flow links are those used directly to invoke routines. Examples are procedure calls, remote procedure calls etc.
- Data flow links are used to exchange data between components; examples are shared memory, message passing etc.
- Mixed data-control interactions links are those that can accept data from one component and change it into control or vice versa.

These properties are a set and are iterative for each interface the component offers.

### Required environment

A list of those components required for this component to operate.

### Use environment

This is defined as a list of those components, in a configuration, against which other properties were measured or derived. This may be displayed in dialog box 16f in Figure 7.

### Packaging

Values:
- Independent Programmes are things like overlays, Java beans, and independent programs.
- Linkable Components are for example object modules, class libraries and function libraries which need to be linked together with other system components to make a functioning executable programme.

### Control Values

- Centralised control, single programs written without concurrency and hence the assumption of a single control thread.
- Decentralised control, components in systems with concurrency and/or multiple threads allowing a given program to have it's own thread of control
- No control assumption.

### Synchronisation Values

- Synchronous, is when a component suspends its execution while waiting for a response
- Asynchronous is when a component continues execution after sending a request.

### Binding

Binding type has the following scale point definitions
- Mixed, which is where the component can be bound either dynamically or statically
- Dynamic binding where the links are changeable
- Topological dynamic binding
- Run time dynamic binding
- Compile time dynamic binding
- Static binding where links are explicitly declared in the programme

### Non-Functional Properties

### Performance

Any standard performance characteristics for this type of component e.g. transactions per second, refresh rate etc

### General & Commercial properties

### Price

The cost of the component against one or more required environments and license types

### Release date

This is defined as the date on which the component was formally released for supply.

### Application Domain

This describes the business application domain for which the component was developed/made. Allowable values are
- None specific
- Bank and finance
- e-Commerce
- Global Industry, Property & Construction
- Travel, Leisure & Business Services
- Retail, Brands & Distribution
- Public administration/government
- Telecommunications
- Software engineering
- Other

### Documentation Availability

This property allows the supplier to indicate the availability of documentation on the component. It is an indicator of availability, not the documentation itself. For example documentation Availability = Source Code, Pascal

### Demonstration Availability

This property allows the supplier to indicate the availability of any demonstration of the component. It is an indicator of availability, not the demonstration itself (although a link to the demonstration may be included if appropriate).

Allowable Values
- Yes
- No

### Supplier Name and Details

This includes the supplier's name, displayed in dialog box 16d of Fig. 7, together with their address and contact details.

This may also include Company annual turnover, as indication of supplying company size. Allowable Values
- Less than £50,000 p.a.
- £50,000 - £100,000 p.a.
- £100,000 - £500,000 p.a.
- £500,000 - £1,000,000 p.a.
- More than £1,000,000 p.a.

### License Type

Allowable Values
- None
- Single Use
- Multiple Use
- Site
- Full
- Shareware
- Freeware

From the foregoing, it will be understood that when carrying out searches for suitable components, the constraints applied to the searching at step S2.4 in Figure 3 may be in respect of one or more of the component parameters listed above. Furthermore, the searching is configured so that when considering the interrelationship of components i.e. their ability to operate with one another, searching may be configured to take account of the information flow arrows specified in Figure 4, which, as previously explained are set by the user as previously described with reference to Figure 6.

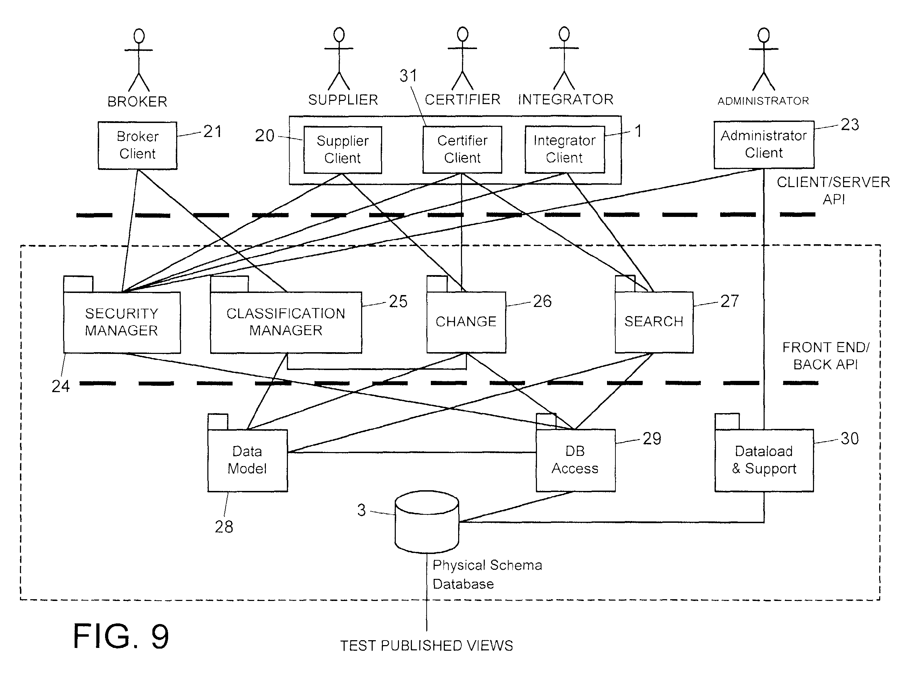

A brokerage system for providing data concerning available components will now be described with reference to Figure 9.

In this arrangement, a database 3 contains data relating to the components, classified as previously described and the client 1 comprises an integrator client, which integrates the various component packages into an enterprise solution as previously discussed. Software components are supplied to the database by a supplier client 20 that may comprise one of a number of individual companies or organisations which have developed bespoke software solutions for particular enterprises. Software components are supplied to the integrator clients 1 by means of a broker client 21 that connects suppliers and integrators. An administrator client 23 maintains the database 3. Packages comprising a security manager 24, classification manager 25, change manager 26 and searching package 27 are provided as middle ware. The back end of the system includes a data model 28 and a database access package 29 which provides access to the data in the database 3. Also, a data loading and support package 30 is provided.

Individual components supplied by supplier clients to the database 3 may be certified by a certifier client 31. This enables the certification categories discussed above to be included into the data stored for individual components.

The described example of the invention has particular application to software components that can be used for e-commerce, for example to provide business-to-business software solutions or other applications which involve transactions through the Internet or similar networks. Individual components are classified according to the aforesaid classification scheme under the control of the classification manager 25 and the data is stored in the database 3 through the access package 29. Also, the integrator client 1 can request a search through the search package 27 of the stored data in the database to find components which satisfy a proposition as previously described.

Thus, in accordance with the invention, characteristics of individual components are classified not only in terms of their functional characteristics but also in terms of non-functional and general characteristics, which greatly assist the designer in selecting components which will be compatible and useful when designing a particular software solution. By the use of abstract component definitions, the desired capability of the system can be correlated with individual software components to facilitate the design process.

## Claims

1. A tool for creating a software solution from a plurality of software components, including:
a user operable input (6) for defining a proposition for a software solution, the proposition being defined in terms of a selection of relatively high level predetermined capabilities (C1, C2, C3) required for the solution,
a searching device (27) responsive to the capabilities selected for the proposition, to search through stored data (A) corresponding to the software components held in a data store (3) , the data corresponding to relatively low level predetermined functional abilities of the software components such as to identify components that have functional abilities associated with the selected capabilities, and
an output (14, 19) to identify the components found by the searching to be suitable for use together to provide a solution corresponding to the proposition.

2. A tool according to claim 1 wherein the wherein the data (A) corresponding to the individual components are associated with component classes (B) which are associated with the capabilities (C).

3. A tool according to claim 1 or 2 wherein the stored data (A) includes data corresponding to both functional abilities and non-functional abilities of the components.

4. A tool according to any preceding claim wherein the input (27) is operable to define links between the capabilities for the proposition and the searching device is operable to search the stored data to identify components which can perform with one another according to the links.

5. A tool according to any preceding claim wherein the searching device is operable to apply constraints to the search performed according to predetermined characteristics of the stored data.
